# EUROPÄISCHE PATENTSCHRIFT

(11) **EP 1 750 957 B1**
(45) Veröffentlichungstag und Bekanntmachung des Hinweises auf die Patenterteilung: **19.01.2011**
(21) Anmeldenummer: 05738016.4
(22) Anmeldetag: 25.04.2005
(51) Int. Cl.: B60G 17/052

(54) **VERFAHREN ZUR LUFTMENGENREGELUNG IN EINER GESCHLOSSENEN LUFTVERSORGUNGSANLAGE FÜR EIN FAHRWERK**
METHOD FOR ADJUSTING THE AMOUNT OF AIR IN A CLOSED AIR SUPPLY SYSTEM FOR A CHASSIS
PROCEDE DE REGULATION DU VOLUME D'AIR D'UNE INSTALLATION D'ALIMENTATION EN AIR FERMEE D'UN CHASSIS

(30) Priorität: 19.05.2004 DE 102004025340
(43) Veröffentlichungstag der Anmeldung: 14.02.2007
(73) Patentinhaber: Continental Teves AG & Co. oHG, 60488 Frankfurt (DE)
(72) Erfinder: STEGMANN, Axel, 60318 Frankfurt/Main (DE)
(74) Vertreter: Finger, Karsten
(86) Internationale Anmeldenummer: PCT/EP2005/051830
(87) Internationale Veröffentlichungsnummer: WO 2005/113272

(56) Entgegenhaltungen:
- EP-A- 1 243 447
- US-A1- 2002 166 321
- US-A1- 2004 026 835

## Beschreibung

Die Erfindung bezieht sich auf ein Verfahren nach dem Oberbegriff des Anspruchs 1. Derartige Luftversorgungsanlagen werden beispielsweise für die Niveauregelung von Kraftfahrzeugen eingesetzt.

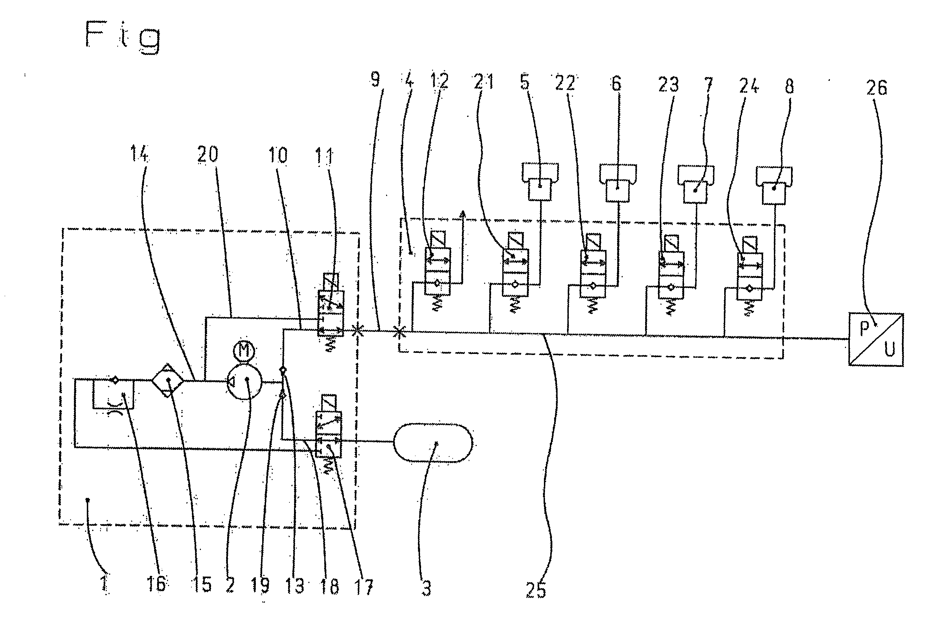

Eine solche Luftversorgungsanlage ist aus der EP 1 243 447 A2 bekannt. Diese Luftversorgungsanlage besteht gemäß ihrer Fig. 2 im Wesentlichen aus einer Luftversorgungseinheit und mehreren Luftfedereinheiten zur Abstützung des Fahrzeugaufbaus.
Zur Luftversorgungseinheit gehören in der Hauptsache ein Kompressor und ein Luftdruckspeicher. Dabei besitzt der Kompressor eine erste Saugleitung mit einem Anschluss zur Atmosphäre und eine erste Druckleitung, die über einen Lufttrockner und einem ersten 3/2-Wegeventil zum Luftdruckspeicher führt. Damit versorgt der Kompressor den Luftdruckspeicher mit Luft aus der Atmosphäre. Der Kompressor besitzt obendrein über eine zweite Saugleitung und über ein zweites 3/2-Wegeventil Anschluss an die Luftfedereinheiten. Über diese zweite Saugleitung und über seine erste Druckleitung füllt der Kompressor Druckluft aus den Luftfedereinheiten in den Luftdruckspeicher um. Der Kompressor besitzt über eine dritte Saugleitung und über das erste 3/2-Wegeventil Anschluss an den Luftdruckspeicher und über eine zweite Druckleitung und über das zweite 3/2-Wegeventil Verbindung zu den Luftfedereinheiten. Dadurch wird Druckluft aus dem Luftdruckspeicher in die Luftfedereinheiten befördert.

Die Luftfedereinheiten sind parallel zueinander angeordnet, wobei jeder Luftfedereinheit ein 2/2-Wegeventil zugeordnet ist und alle 2/2-Wegeventileinheiten über eine Sammelleitung mit der Luftversorgungseinheit verbunden sind. In der gemeinsamen Sammelleitung der Wegeventileinheit befindet sich ein Drucksensor.
Solche geschlossenen Luftversorgungsanlagen arbeiten innerhalb eines vorher festgelegten Leistungsbereiches, deren Grenzen dadurch unterschritten werden können, indem Druckluft durch eine Leckage entweicht oder sich das Druckvolumen durch einen Temperaturabfall verringert, oder deren Grenzen dadurch überschritten werden können, indem sich das Druckvolumen durch einen Temperaturanstieg erhöht. Das hat innerhalb der Niveauregelung des Fahrzeuges die Auswirkungen, dass sich das Anheben des Fahrzeugaufbaus verlangsamt, wenn das Druckvolumen zu gering ist, und dass sich das Absenken des Fahrzeugaufbaus verlangsamt, wenn das Druckvolumen zu hoch ist.
Zur Sicherstellung des Leistungsbereiches in seinen zulässigen Grenzen muss der Druck in den Luftfedereinheiten und im Speicher ständig überprüft werden, um rechtzeitig Druckluft in den Luftdruckspeicher nachzufüllen beziehungsweise aus den Luftdruckspeicher abzulassen. Die Überprüfung des Leistungsbereiches geschieht durch regelmäßige Messung des Druckes in den Luftfedereinheiten und im Luftdruckspeicher zur Bestimmung des Gesamtdruckvolumens in der Luftversorgungsanlage. Zur Druckmessung in den Luftfedereinheiten werden die entsprechenden 2/2-Wegeventile bei einer entsprechenden Sperrstellung der beiden 3/2-Wegeventile in der Versorgungseinheit nacheinander geöffnet und die sich dabei in der Sammelleitung nacheinander einstellenden Drücke mit Hilfe des Drucksensors gemessen. Zur Druckmessung im Luftdruckspeicher werden die entsprechenden 3/2-Wegeventile bestromt, damit am Drucksensor der Druck aus dem Luftdruckspeicher ansteht. Aus den in der Sammelleitung gemessenen Drücken für die Luftfedereinheiten und dem Luftdruckspeicher werden der Bedarf oder der Überschuss an Druckluftvolumen errechnet und die entsprechenden Schaltstellungen an den 3/2-Wegeventilen realisiert, um die Druckluftmengen im Luftdruckspeicher auszugleichen.

Dieses Verfahren hat aber Nachteile. So kommt es beim Öffnen der 2/2-Wegeventile auf Grund unterschiedlicher Drücke zu einem Druckvolumenausgleich zwischen den Luftfedereinheiten einerseits und der Sammelleitung einschließlich des Trockner- und Kompressorvolumens andererseits. Das verzögert die Druckmessung, weil sich der Druck in der Sammelleitung mit dem Druck in den Luftfedereinheiten vor der Messung ausgleichen muss. Außerdem kommt es durch den Druckvolumenausgleich zwangsläufig zu einer Höhenveränderung der Luftfedereinheiten und damit des Fahrzeugaufbaus. Solche ungewollten Veränderungen der Fahrzeughöhe während der Druckmessung und während der Ventilschaltung sind ein Sicherheitsrisiko, zumal die Größe der Höhenveränderungen vorher nicht abschätzbar ist. Dabei steigt das Sicherheitsrisiko mit größer werdender Last.

Der Erfindung liegt daher die Aufgabe zu Grunde, ein gattungsgemäßes Verfahren zu entwickeln, mit dem mögliche Druck- und Volumenausgleiche über die schaltbaren Ventile weitestgehend vermieden werden.
Diese Aufgabe wird durch die kennzeichnenden Merkmale des Anspruches 1 gelöst. Zweckmäßige Ausgestaltungsmöglichkeiten ergeben sich aus den Unteransprüchen 2 bis 3.
Das neue Verfahren zur Luftmengenregelung beseitigt die genannten Nachteile des Standes der Technik. Mit der Schätzung der Drücke in den Luftfedereinheiten und der darauf aufbauenden Schaltung eines Wegeventils werden die Drücke über den entsprechenden 2/2-Wegeventile weitestgehend angeglichen, sodass die bei den Druckmessungen sonst üblichen ruckartigen Veränderungen in der Höhe des Fahrzeugaufbaus fast ganz ausbleiben. Das ist darauf zurückzuführen, dass bei einem höher liegenden Druck im Luftdruckspeicher keine Verbindung vom Luftdruckspeicher zu den Luftfedereinheiten besteht und bei einem höher liegenden geschätzten Druck in den Luftfedereinheiten die Luftfedereinheiten nur mit einem minimal begrenzten Kammervolumen verbunden sind. Dadurch das Gefahrenrisiko während der Druckmessung wesentlich verringert. Ein weiterer Vorteil besteht darin, dass sich die Drücke über den 2/2-Wegeventilen der Luftfedereinheiten auf Grund der nur geringen Druckluftmengen sehr schnell angleichen. Das macht die Luftmengenregelung in der Luftversorgungsanlage reaktionsschneller.
Es ist dabei von Vorteil, dass die Regulierung des für die Druckmessung vorgesehenen Kammervolumens über ein vorhandenes 3/2-Wegeventil erfolgt Dadurch erspart sich der Einbau eines zusätzlichen Steuerventils. Mit dem vorhandenen 3/2-Wegeventl ist es möglich, bei einem höher liegenden geschätzten Druck in den Luftfedereinheiten den Kompressor zu umgehen und so nur den Trockner mit seinem relativ kleinen Kammervolumen in die Sammelleitung der Luftfedereinheiten einzubinden.

Die Erfindung soll anhand eines Ausführungsbeispieles näher erläutert werden.
Dazu zeigt die einzige Figur ein Funktionsschaltbild einer geschlossenen Luftversorgungsanlage.
Nach dieser Figur besteht die Luftversorgungsanlage im wesentlichen aus einer Versorgungseinheit 1 mit einem Kompressor 2 und einem Luftdruckspeicher 3 und aus einer Wegeventileinheit 4, die mit vier parallel zueinander angeordneten Luftfedereinheiten 5, 6, 7, 8 in Verbindung steht. Dabei sind in üblicher Weise zwei Luftfedereinheiten zum Beispiel 5 und 6 der Vorderachse und dementsprechend die zwei anderen Luftfedereinheiten 7 und 8 der Hinterachse des Fahrwerkes zugeordnet
Die Versorgungseinheit 1 und die Wegeventileinheit 4 sind über eine Verbindungsleitung 9 miteinander verbunden.

Der Kompressor 2 der Versorgungseinheit 1 besitzt eine erste Saugleitung 10, die über ein erstes 3/2-Wegeventil 11 in der Versorgungseinheit 1, der Verbindungsleitung 9 und über ein 2/2-Wegeventil 12 in der Wegeventileinheit 4 mit der Atmosphäre verbunden ist. Dabei befindet sich in der ersten Saugleitung 10 ein in Richtung zum Kompressor 2 öffnendes Rückschlagventil 13. Druckseitig besitzt der Kompressor 2 eine erste Versorgungsleitung 14, die zum Luftdruckspeicher 3 führt und in der in Reihe ein Lufttrockner 15, ein in Richtung des Luftdruckspeichers 3 öffnendes Drosselrückschlagventil 16 und ein zweites 3/2-Wegeventil 17 angeordnet sind. Über diese erste Saugleitung 10 und der ersten Versorgungsleitung 14 sind auch die Luftfedereinheiten 5, 6, 7, 8 mit dem Luftdruckspeicher 3 verbunden. Der Kompressor 2 besitzt eine zweite Saugleitung 18, die über das zweite 3/2-Wegeventil 17 mit dem Luftdruckspeicher 3 verbunden ist und in der sich ein in Richtung zum Kompressor 2 öffnendes Rückschlagventil 19 befindet. Druckseitig ist der Kompressor 2 weiterhin mit einer zweiten Versorgungsleitung 20 ausgestattet, die über das erste 3/2-Wegeventil 11 der Versorgungseinheit 1 und über die Verbindungsleitung 9 zur Wegeventileinheit 4 und damit zu den Luftfedereinheiten 5, 6, 7, und 8 führt.

In der Wegeventileinheit 4 befinden sich neben dem 2/2-Wegeventil 12 für den Anschluss an die Atmosphäre vier weitere 2/2-Wegeventileinheiten 21, 22, 23, 24, die parallel zueinander angeordnet sind. Dabei ist jedes 2/2-Wegeventil 21, 22, 23, 24 einerseits über eine Sammelleitung 25 und über die Verbindungsleitung 9 mit der Versorgungseinheit 1 und andererseits jeweils mit einem der Luftfedereinheiten 5, 6, 7, 8 verbunden. In der Sammelleitung 25 der Wegeventileinheit 4 befindet sich ein Drucksensor 26.

Zur Befüllung des Luftdruckspeichers 3 mit Luft aus der Atmosphäre ist das 2/2-Wegeventil 12 in der Wegeventileinheit 4 geöffnet und das erste 3/2-Wegeventil 11 der Versorgungseinheit 1 befindet sich in der gezeigten, nicht bestromten Stellung, in der die Saugseite des Kompressors 2 mit der Wegeventileinheit 4 verbunden ist, und das zweite 3/2-Wegeventil 17 hat die nicht gezeigte, bestromte Stellung inne, die die Druckseite des Kompressors 2 mit dem Luftdruckspeicher 3 verbindet. Der Kompressor 2 saugt über das geöffnete 2/2-Wegeventil 12 und die Saugleitung 10 Luft aus der Atmosphäre an und befördert die verdichtete Luft durch die erste Versorgungsleitung 14 und dem zweiten 3/2-Wegeventil 17 in den Luftdruckspeicher 3.

Zur Befüllung der Luftfeder-Dämpfereinheiten 5, 6, 7, 8 mit getrockneter Luft aus dem Luftdruckspeicher 3 befinden sich das zweite 3/2-Wegeventil 17 in der unbestromten Stellung und das erste 3/2-Wegeventil 11 in der bestromten Stellung. Dadurch besteht über dem zweiten 3/2-Wegeventil 17, dem Kompressor 2 und dem ersten 3/2-Wegeventil 11 eine Verbindung zwischen dem Luftdruckspeicher 3 und den Luftfedereinheiten 5, 6, 7, 8. Dabei befinden sich das 2/2-Wegeventil 12 der Wegeventileinheit 4 in der unbestromten Sperrstellung und die entsprechenden 2/2-Wegeventile 21, 22, 23, 24 in der bestromten Durchlassstellung.
Um das Leistungsvermögens der Luftversorgungsanlage innerhalb ihrer Grenzen konstant zu halten, muss das Druckvolumen in den Luftfedereinheiten 5, 6, 7, 8 und im Luftdruckspeicher 3 ständig überprüft und gemessen werden, um den Luftdruckspeicher 3 mit zusätzlicher Druckluft zu versorgen oder um eine überschüssige Druckluftmenge aus dem Luftdruckspeicher 3 abzulassen.
Dazu wird folgendes Verfahren angewendet:
Zunächst wird der Druck in den entsprechenden Luftfedereinheiten 5, 6 einer Fahrzeugachse, zum Beispiel der Vorderachse, geschätzt. Diese Schätzung erfolgt auf der Grundlage von Erfahrungswerten und unter Hinzuziehung von bekannten und leicht feststellbaren Parametern. Zu diesen Parametern gehört beispielsweise die aktuelle Höhe des Fahrzeugaufbaus. Diese Fahrzeugauibauhöhe kann zum Beispiel an Hand der ausgefahrenen Länge der Kolbenstangen der Luftfedereinheiten 5, 6 von Höhensensoren ermittelt werden, die an jeder Achse oder an jeder Luftfedereinheit angebracht sind.
Zu den Parametern gehört auch der aktuelle Druck des Luftdruckspeichers 3 in Verbindung mit der Beladungscharakteristik. Dabei wird der aktuelle Druck des Luftdruckspeichers 3 in einfacher Weise gemessen, indem die beiden 3/2-Wegeventile 11, 17 in die entsprechenden Stellungen geschaltet und damit der Luftdruckspeicher 3 mit dem Drucksensor 26 in der Wegeventileinheit 4 verbunden werden. Die Beladungscharakteristik, die der Druckverteilung auf die beiden Achsen des ausgeregelten Fahrzeuges bei einer bestimmten Beladung entspricht, ergibt sich aus der speziellen Fahrzeugcharakte ristik. Ermittelt wird diese Beladungscharakteristik durch vorhergehende Messungen bei verschiedenen Beladungsfällen zwischen klein und voll.
Der so geschätzte Druck in den Luftfedereinheiten 5, 6 wird zunächst mit dem Druck im Luftdruckspeicher 3 verglichen.

Ist der Druck im Luftdruckspeicher 3 größer als der geschätzte Druck in den Luftfedereinheiten 5, 6, dann wird das erste 3/2-Wegeventil 11 in die unbestromte Stellung gebracht. Dadurch wird die Verbindung vom Luftdruckspeicher 3 über den Kompressor 2 und der zweiten Versorgungsleitung 20 zu den Luftfedereinheiten 5, 6 unterbrochen und gleichzeitig die Verbindung über die erste Saugleitung 10 durch das durch den höheren Speicherdruck belastete Rückschlagventil 13 gesperrt. Damit ist das Volumen der Sammelleitung 25 von den Volumina des Luftdruckspeichers 3, des Kompressors 2 und des Trockners 15 getrennt.
Jetzt werden nacheinander die 2/2-Wegeventile 21, 22 geöffnet, sodass es zu einem Ausgleich der Drücke beiderseits der 2/2-Wegeventile 21, 22 kommt. Dabei findet wegen des geringen und begrenzten Volumens in der Sammelleitung 25 nur ein geringer Ausgleichs des Druckvolumens zwischen den Luftfedereinheiten 5, 6 und der Sammelleitung 25 statt, sodass sich auch nur eine unwesentliche Erhöhung des Fahrzeugaufbaus einstellt.
Danach wird der Druck in der Sammelleitung 25 mit Hilfe des Drucksensors 26 gemessen, der gleichzeitig dem Druck in der entsprechenden Luftfedereinheit 5, 6 entspricht.

Ist der geschätzte Druck in den Luftfedereinheiten 5, 6 höher als der Druck im Luftdruckspeicher 3, dann wird das erste 3/2-Wegeventil 11 in die bestromte Stellung gebracht. Dadurch wird die Sammelleitung 25 über die zweite Versorgungsleitung 20 unter Umgehung des Kompressors 2 lediglich mit dem Volumen des Trockners 15 verbunden.
In dieser Stellung des 3/2-Wegeventils 11 werden wiederum die 2/2-Wegeventile 21, 22 geöffnet, sodass es zu einem Druckausgleich über die 2/2-Wegeventile 21, 22 kommt. Dabei findet ein Ausgleich des Druckvolumens zwischen dem Volumen der Luftfedereinheiten 5, 6 einerseits und den Volumina der Sammelleitung 25 und des Trockners 15 andererseits statt, der aber wegen des geringen und begrenzten Volumens in der Sammelleitung 25 und dem Trockner 15 wieder nur sehr gering ausfällt. Die Fahrzeughöhe wird sich also nur unwesentlich verringern.
Danach wird wieder der Druck in der Sammelleitung 25 mit Hilfe des Drucksensors 26 gemessen, der gleichzeitig dem Druck in der entsprechenden Luftfedereinheit 5, 6 entspricht.

Nach dem gleichen Verfahren werden die Drücke für die Luftfedereinheiten 7, 8 der Hinterachse ermittelt, wobei bei die gemessenen Drücke für die Luftfedereinheiten 5, 6 der Vorderachse in die Schätzung der Drücke für die Luftfedereinheiten 7, 8 der Hinterachse mit einbezogen werden. Das macht die Schätzung für die Hinterachse noch genauer.
Mit dem bekannten Volumen des Luftdruckspeichers 3 und dem gemessenen Druck des Luftdruckspeichers 3 sowie mit dem über einen Wegsensor ermittelten Volumen der Luftfedereinheiten 5, 6, 7, 8 und dem über die beschriebene Schätzung ermittelten Druck der Luftfedereinheiten 5, 6, 7, 8 beider Fahrzeugachsen wird das Druckvolumen der geschlossenen Luftversorgungsanlage errechnet. Daraus ergibt sich, ob in der Luftversorgungsanlage ein Bedarf oder ein Überschuss an Druckluftvolumen besteht. Dementsprechend werden das 2/2-Wegeventil 12 und die beiden 3/2-Wegeventile 11, 17 in bekannter Weise geschaltet, um Druckluft aus dem Luftdruckspeicher 3 abzulassen oder Druckluft in den Luftdruckspeicher 3 einzuspeisen.

**Liste der Bezugszeichen**
- 1: Versorgungseinheit
- 2: Kompressor
- 3: Luftdruckspeicher
- 4: Wegeventileinheit
- 5: Luftfeder-Dämpfereinheit
- 6: Luftfeder-Dämpfereinheit
- 7: Luftfeder-Dämpfereinheit
- 8: Luftfeder-Dämpfereinheit
- 9: Verbindungsleitung
- 10: erste Saugleitung
- 11: erstes 3/2-Wegeventil
- 12: 2/2-Wegeventil
- 13: Rückschlagventil
- 14: erste Versorgungsleitung
- 15: Lufttrockner
- 16: Drosselrückschlagventil
- 17: zweites 3/2-Wegeventil
- 18: zweite Saugleitung
- 19: Rückschlagventil
- 20: zweite Versorgungsleitung
- 21: 2/2-Wegeventil
- 22: 2/2-Wegeventil
- 23: 2/2-Wegeventil
- 24: 2/2-Wegeventil
- 25: Sammelleitung
- 26: Drucksensor

## Patentansprüche

1. Verfahren zur Luftmengenregelung in einer geschlossenen Luftversorgungsanlage für ein Fahrwerk, bei dem der Druck in einer, alle Luftfedereinheiten (5, 6, 7, 8) miteinander verbindenden Sammelleitung (25) gemessen und daraus unter Hinzuziehung weiterer bekannter Parameter die Ist-Druckluftmenge der Luftversorgungsanlage errechnet, mit einer Soll-Druckluftmenge verglichen und die Differenz-Druckluftmenge dementsprechend ausgeglichen wird,
**dadurch gekennzeichnet, dass** vor der Messung des Drucks in der Sammelleitung (25) zunächst der Druck in den Luftfedereinheiten (5, 6, 7, 8) auf der Grundlage bekannter Parameter geschätzt und dann mit dem bekannten Druck des Luftdruckspeichers (3) verglichen wird, wobei bei einem höheren Druck im Luftdruckspeicher (3) die Sammelleitung (25) vom Luftdruckspeicher (3) und allen druckgleichen Kammervolumen getrennt und bei einem höheren geschätzten Druck in den Luftfedereinheiten (5, 6, 7, 8) die Sammelleitung (25) mit einem kleinstmöglichen Kammervolumen verbunden wird, wobei die zum Luftdruckspeicher (3) druckgleichen Kammervolumen durch den Kompressor (2) und den Trockner (15) und das kleinstmögliche Kammervolumen durch den Trockner (15) gebildet werden und wobei
die Sperrung der Sammelleitung (25) vom Luftdruckspeicher (3) und die Verbindung der Sammelleitung (25) mit dem kleinstmöglichen Kammervolumen der Luftversorgungsanlage durch ein in der Versorgungseinheit (1) befindliches 3/2-Wegeventil (11) erfolgt.

2. Verfahren nach Anspruch 1,
**dadurch gekennzeichnet, dass** die Schätzung des Drucks in den Luftfedereinheiten (5, 6, 7, 8) auf der Grundlage der Fahrzeughöhe, der aktuellen Beladung und/oder der Beladungscharakteristik des Fahrzeuges erfolgt.

3. Verfahren nach Anspruch 2,
**dadurch gekennzeichnet, dass** zunächst der Druck in den Luftfedereinheiten (5, 6) zum Beispiel der Vorderachse und dann der Druck in den Luftfedereinheiten (7, 8) der Hinterachse geschätzt und gemessen werden, wobei der gemessene Druck in den Luftfedereinheiten (5, 6) der Vorderachse zur Schätzung des Drucks in den Luftfedereinheiten (7, 8) der Hinterachse mit einbezogen werden.

## Claims

1. Method for adjusting the amount of air in a closed air supply system for a chassis, in which the pressure is measured in a collector line (25) which connects all the air spring units (5, 6, 7, 8) to one another, and the actual compressed air amount of the air supply system is calculated therefrom with the inclusion of further known parameters, is compared with a setpoint compressed air amount and the differential compressed air amount is equalized accordingly, **characterized in that**, prior to the measurement of the pressure in the collector line (25), first of all the pressure in the air spring units (5, 6, 7, 8) is estimated on the basis of known parameters and is then compared with the known pressure of the air pressure accumulator (3), the collector line (25) being separated from the air pressure accumulator (3) and all equal pressure chamber volumes in the event of a higher pressure in the air pressure accumulator (3), and the collector line (25) being connected to a smallest possible chamber volume in the event of a higher estimated pressure in the air spring units (5, 6, 7, 8), the chamber volumes at equal pressure to the air pressure accumulator (3) being formed by the compressor (2) and the dryer (15) and the smallest possible chamber volume being formed by the dryer (15) and the collector line (25) being shut off from the air pressure accumulator (3) and the collector line (25) being connected to the smallest possible chamber volume of the air supply system by a 3/2-way valve (11) which is situated in the supply unit (1).

2. Method according to Claim 1, **characterized in that** the pressure in the air spring units (5, 6, 7, 8) is estimated on the basis of the vehicle height, the current loading and/or the loading characteristics of the vehicle.

3. Method according to Claim 2, **characterized in that** first of all the pressure in the air spring units (5, 6), for example, of the front axle is estimated and measured and then the pressure in the air spring units (7, 8) of the rear axle is estimated and measured, the measured pressure in the air spring units (5, 6) of the front axle being included for the estimation of the pressure in the air spring units (7, 8) of the rear axle.

## Revendications

1. Procédé de régulation de la quantité d'air dans une installation fermée d'alimentation en air d'un train de roulement, dans lequel la pression qui règne dans un conduit de collecte (25) qui relie les unes aux autres toutes les unités d'amortissement pneumatique (5, 6, 7, 8) est mesurée et, à partir de là, la quantité d'air comprimé effective de l'installation d'alimentation en air est calculée en tenant compte d'autres paramètres connus, est comparée à une quantité d'air comprimé de consigne, la différence entre les débits d'air comprimé étant compensée,
**caractérisé en ce que**
avant la mesure de la pression dans le conduit de collecte (25), la pression qui règne dans les unités (5, 6, 7, 8) d'amortissement pneumatique est estimée sur la base de paramètres connus et est ensuite comparée à la pression connue qui règne dans la réserve (3) d'air comprimé,
**en ce que** si la pression dans la réserve (3) d'air comprimé est plus élevée, le conduit de collecte (25) est séparé de la réserve (3) d'air comprimé et de tous les volumes de chambre à même pression,
**en ce que** si la pression estimée dans les unités (5, 6, 7, 8) d'amortissement pneumatique est plus élevée, le conduit de collecte (25) est relié à un volume de chambre aussi petit que possible,
**en ce que** le volume des chambres à même pression que la réserve (3) d'air comprimé est établi par l'intermédiaire du compresseur (2) et le séchoir (15) et le volume de chambre le plus petit possible est établi par l'intermédiaire du séchoir (15) et
**en ce que** le blocage du conduit de collecte (25) par rapport à la réserve (3) d'air comprimé et la liaison du conduit de collecte (25) avec le volume de chambre le plus petit possible de l'installation d'alimentation en air s'effectuent par une soupape (11) à 3/2 voies située dans l'unité d'alimentation (1).

2. Procédé selon la revendication 1, **caractérisé en ce que** l'estimation de la pression qui règne dans les unités (5, 6, 7, 8) d'amortissement pneumatique est réalisée en fonction de la hauteur du véhicule, de sa charge effective et/ou de la caractéristique de charge du véhicule.

3. Procédé selon la revendication 2, **caractérisé en ce qu'**il estime et mesure d'abord la pression qui règne par exemple dans les unités (5, 6) d'amortissement pneumatique de l'essieu avant et ensuite la pression qui règne dans les unités (7, 8) d'amortissement pneumatique de l'essieu arrière, la pression mesurée dans les unités (5, 6) d'amortissement pneumatique de l'essieu avant étant prise en compte dans l'estimation de la pression qui règne dans les unités (7, 8) d'amortissement pneumatique de l'essieu arrière.
